# EUROPEAN PATENT SPECIFICATION

(11) **EP 3 509 175 B1**
(45) Date of publication and mention of the grant of the patent: **17.03.2021**
(21) Application number: 19020002.2
(22) Date of filing: 02.01.2019
(51) Int. Cl.: H02G 3/06, H02G 3/08, H02G 15/007

(54) **WIRE LOCKING DEVICE**
KABELHALTEVORRICHTUNG
DISPOSITIF DE VERROUILLAGE POUR UN CÂBLE

(30) Priority: 03.01.2018 IT 201800000353
(43) Date of publication of application: 10.07.2019
(73) Proprietor: B.D.G. el S.r.l., 21020 Bardello (IT)
(72) Inventor: Marinoni, Stefano, I-21020 Bardello (VA) (IT)
(74) Representative: Contessini, Pier Carlo

(56) References cited:
- EP-A2- 2 556 783
- WO-A1-2008/122851
- US-A- 3 751 579
- US-A- 4 077 085

## Description

### Field of the invention

The present invention relates to a wire locking device; in particular, the present invention relates to such a wire locking device for feeding domestic appliances to optimize the assembly cycle.

### Background.

The system for wire locking for domestic appliances must ensure that the electric wire does not slip out and does not rotate under certain stresses.

Normally the wire locking system is mechanically tightened along all or part of the circumference. The blocking causes the crushing of the insulating element, whether rubber or PVC, or other elastic insulating material.

In this way a pressure creating a high friction at the longitudinal sliding and rotation is exerted, without damaging the insulation and the conductor elements.

Several technologies are known for achieving mechanical wire locking, such as the presence of a tilting flap fixing to at least one screw; co-molding the base around the wire; presence of locking wedges or cones within a seat, with or without anti-slip locking teeth with or without locking screw; scrolling preventing labyrinths; self-locking eccentrics with sliding movement; bands of various kinds, etc.

Typically, the elements contributing to such wire locking must be in possession of other basic characteristics, such as reliability over time under the aging effect, especially for plastic materials; ease of disassembly and repairability; be made in fireproof/self-extinguishing material at different levels.

In order to assemble and lock the electric wire, each of the cited above known in the art wire locking technologies involves a more or less complex working method, and therefore it is more or less expensive.

In particular, when it comes to perform the wire blocking with medium or large terminals, and/or with a wire having diameter and poorly flowing material, or terminals having critical dimensions, the situation becomes very difficult. In fact it is necessary to pass the wire terminal (or terminals) in a guide hole, which, for other needs, can have a diameter reduced to a minimum size. In this case, the insertion is difficult, uncomfortable, and takes a long time to complete.

Typically, a multipolar electric wire consists of at least two internal wires, the outer insulator is made of rubber or plastic suitable for the purpose, of a black colour or other colour, having a variable diameter. The insulating of the individual internal wire is made of rubber or plastic suitable for the purpose, wherein each wire is of a different colour, with a tip or blade connection terminal ("faston" type), or being of different nature, and various sizes. The external wire insulation is unsheathed allowing the individual wires to be free for a certain variable length as needed.

Typically, a method of locking such a wire uses a plate with a containment cylinder and a wire guide, two wedge-type locking semi-cones, with a snap-on tooth which prevents return slip back to the end. The assembly method consists of threading the wire along the locking cylinder, up to the desired position, then applying the two semi-cones keeping them aligned and parallel one each other, at the correct distance, making a manual pre-insertion between the cylinder and the wire, as far as possible. Finally, the locking semi-cones insertion is completed by a mechanical pressing up to let the pressure teeth protruding on the other side.

The above described locking method therefore entails a long operation due to the need of manual insertion of individual wires, one by one, with terminals, subsequent locking cones application, and pressing until the anti-slip teeth protrude. The phase involving the wire and semi-cones insertion is therefore the critical point of the whole wire locking phase.

US Patent No. 3751579 discloses a bush for protecting and retaining an electrical wire passing through an opening on the side of an electrical box. The bush is built to have a slot that runs parallel to its axis and a gate-shaped holding means which is received transversely to the slot to keep the wire in position. The bush is composed of a first portion which is received in the opening of the box and a second portion containing the retention means which are partially connected so that after the bush is in position, the second portion can be deformed with a tool for allowing the detention means removal.

Patent application No. EP 2556783 A2 discloses a dishwasher equipped with a power cable, a portion of which is inserted into a first receiving groove for fixing the power cable to the housing body of the dishwasher.

International Patent application No. WO 2008/122851 A1 discloses a connection cover for washing machines used to fix a cable to the machine. A groove is present on opposite sides of the lid to tighten the cable between the lid and the groove.

US Patent No. 4077085 discloses a monoblock plastic cable guide including a female element having a flanged U-shaped face and a chamber for accommodating elongated electrical conducting means, a male element adapted to fit inside the chamber of the female element by distortion and locking engagement of said conducting means with it and connection means for connecting said two members in the form of a unitary assembly. The two members remain in the form of a single unit connected by the connection without accidental separation from each other until the sealing ring is used.

Therefore, the Applicant of the present patent application has found the need to provide a wire locking system which is slimmer, simpler, and automatable.

### Summary of the invention

In a first aspect, the present invention refers to a system for wire locking as defined claim 1.

The Applicant of the present application has in fact surprisingly found that the above-mentioned technical problem can be effectively and reliably solved by means of a system for wire locking which comprises the features recited in claim 1.

The term "wire" in the present disclosure and in the appended claims means a wire consisting of an external insulation enclosing several insulated wires inside it.

In this way, thanks to the presence of such a suitable sized lateral opening in the main body of the seat provided in the plate, it is first possible to allow, by a first horizontal movement, only the second length wire portion, or the one that remains below the shell device, to pass through the lateral opening, and only subsequently, to allow the shell device to vertically downward slide so as to fix it to the plate.

Therefore, it is no longer necessary the individual (one by one) wire insertion through an opening placed underneath or above the seat through an axially movement, as it was the case in the prior art due to the encumbrance problem of the shell device that contains the wires; the whole shell device with the wires inserted therein is now laterally inserted through a single movement.

According to a preferred embodiment of the present invention, there is a third length wire portion, which is the upward extension of said first length wire portion, which protrudes from said first cavity above said shell device.

According to the present invention, said shell device consists of at least two structural elements, such as a two-shell bush. Further according to the invention, each of the two structural elements is provided with a semi-cylindrical portion so that, when said portions of structural elements are arranged opposite each other, said first cavity inside said shell suitable for housing the wire is substantially cylindrical in shape and therefore suitable for housing a wire and its covering.

In this way it is possible to create said first cavity inside the two structural elements forming the shell device so as to be able to house the wire therein.

According to a preferred embodiment of the present invention, each of said first and second structural members is provided with a first lateral end connected by at least one connecting element to a second lateral end, opposite to said first lateral end.

Preferably, said connecting element is of a size suitable for ensuring the correct positioning of the two structural elements during assembly, also in view of any anti-rotation projections.

According to a preferred embodiment of the present invention, one of the second lateral end of the first or of the second structural element may be provided with a protrusion adapted to fit in and interact with a corresponding housing formed in correspondence of the other one between the second lateral end of the second or of the first structural element when said semi-cylindrical portions of the structural elements are arranged opposite one each other around said wire.

In this way the two structural elements are also axially firmly fixed to each other so as to lock the wire at their inside.

According to the invention, the outer surface of at least one of said structural elements which form said shell device is provided in its lower part with protruding or cantilevered fasteners, such as snap-type fixing teeth.

In this way, said fastening elements present in the lower part of the outer surface of the shell device allow to fix the shell device itself in said seat provided in the plate onto which the wire is to be secured. In fact, these snap fasteners prevent axial anti-threading movements on the seat edges.

According to a preferred embodiment of the present invention, said protruding or cantilevered fastening elements, such as snap fastening teeth, have a prismatic shape, so as to prevent any unwanted rotation once inserted into the seat.

According to a preferred embodiment of the present invention, said main body of the seat having inside said second cavity suitable for housing the shell device with inside the wire, extends substantially perpendicular to the plate.

In this way, once said second length wire portion has been passed through the lateral opening provided in the seat by said first horizontal movement, the shell device (having at its inside the first length wire portion) insertion into the seat of the plate itself is facilitated thanks to a second up-down movement.

According to the invention, the outer surface of at least one of said structural elements forming said shell device has a square shape. Moreover, also at least a portion of the inner surface of said main body of the seat arranged in the plate has a squared shape, complementary to the squared shape of the shell device outer surface.

In this way the shell device and the main body of the seat have complementary shapes such as to allow the shell device to be housed in a functional manner inside the main body of the seat provided on the plate.

According to the invention, the lower part of the main body of the seat is provided with first undercut elements with which said protruding fastening elements of said structural elements forming said shell device engage.

In this way, the shell device is locked in the main body of the seat.

According to a preferred embodiment of the present invention, at said lateral opening of the main body of the seat, said plate is provided with second undercut elements with which said cantilevered fastening elements of said structural elements forming said shell device are engaged.

In this way the shell device is further clamped to the plate in the main body of the housing, preventing the shell device from laterally leaking from the part where it has entered.

In a second aspect, the present invention relates to a method for wire locking in an appropriate electrical device plate as defined in claim 6.

The Applicant of the present application has in fact surprisingly found that the above-mentioned technical problem can be effectively and reliably solved by means of a method for locking a wire in a suitable electric appliance plate using the system for locking a wire indicated above with reference to the first aspect of the present invention. This method includes the steps recited in claim 6.

In this way, thanks to the presence of such a suitable sized lateral opening in the main body of the seat provided in the plate, it is first possible to let pass through the lateral opening, through a first horizontal movement, only the second length wire portion, or the one that remains below the shell device, and only subsequently, let vertically downward slide the shell device so as to fix it to the plate.

The shell device is locked to the main body of the seat by means of interaction between protruding or cantilevered fasteners provided in the lower part of the outer surface of the shell with first undercut elements provided in the lower part of the inner surface of the main body of the seat and/or with second undercut elements arranged on the plate at the lateral opening of the main body of the seat.

In this way, the shell device containing at its inside the wire to be locked is secured even more securely to the plate of the electric appliance.

According to a preferred embodiment of the method of the present invention, the method can be repeated to automatically realize the blocking of a plurality of shell devices containing the wire at their inside in a corresponding plurality of electric device plates.

Further characteristics and advantages of the present invention will be better highlighted by examining the following detailed description of a preferred but not exclusive embodiment, illustrated by way of non-limiting example, with the support of the attached drawings, in which:
- Figure 1 is a front axonometric view of a shell device used in the system of the present invention;
- Figure 2 is a rear axonometric view of the shell device of Fig. 1;
- Figure 3 is an axonometric view of a multipolar wire wound by the shell device of Figs 1 and 2;
- Figure 4 is an axonometric view from above of a plate of an electric appliance used in the system of the present invention wherein a seat consisting of a main body provided at its inside with a cavity for housing a wire wound by the device shell of Fig. 3 is shown;
- Figure 5 shows the wire wound by the shell device of Fig. 3 during the laterally insertion step in the cavity of the plate shown in Fig. 4;
- Figure 6 shows the same situation as in Fig. 5 wherein the wire has been removed for clarity from the shell device;
- Figure 7 shows the wire wound by the shell device of Fig. 3 locked in the cavity of the plate shown in Fig. 4;
- Figure 8 shows the same situation of Fig. 7 wherein the wire has been removed for clarity from the shell device.

### DETAILED DESCRIPTION

The following detailed description refers to a particular embodiment of the system of the present invention, without limiting its content.

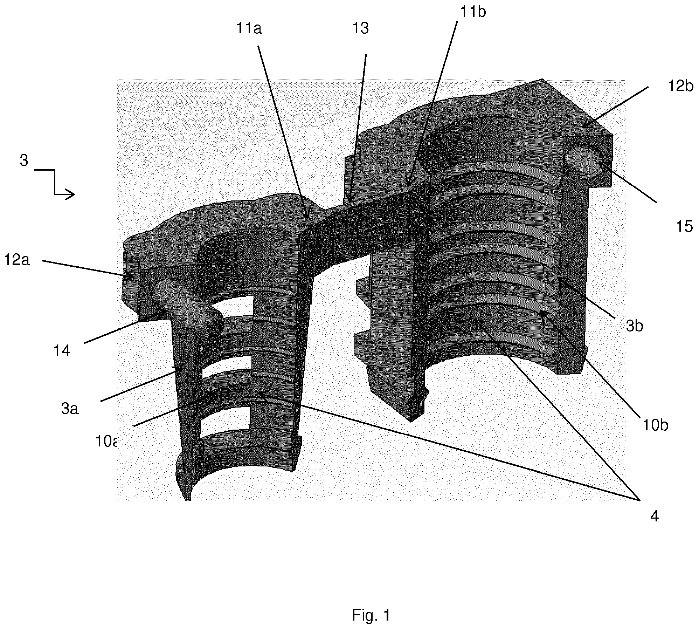

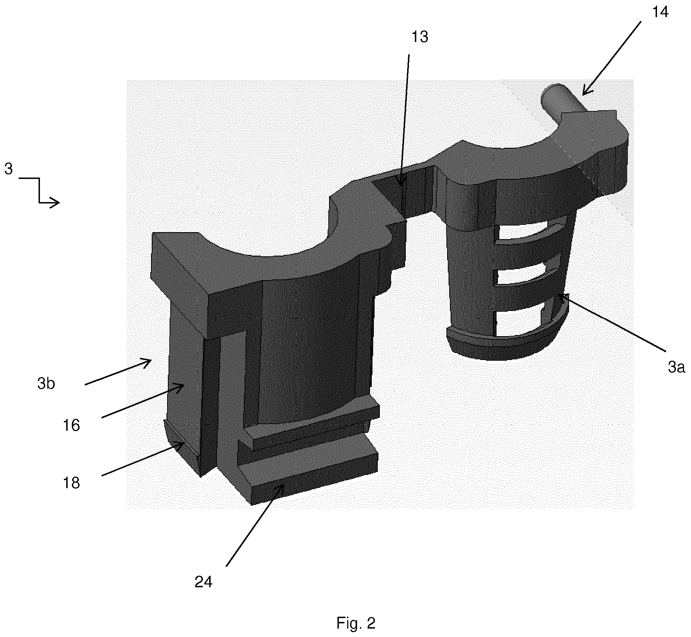

With particular reference to Figures 1-2, a shell device 3 used to wind a wire 2 in the system 1 for wire locking 2 of the present invention is described. The shell device 3 is constituted by a bush with two shells 3a, 3b, each of them being provided with a semi-cylindrical portion 10a, 10b so that when the portions 10a, 10b of the two shells 3a, 3b are placed one in front of the other, a first substantially cylindrical shaped cavity 4 is formed inside them to accommodate the wire 2.

A connecting element 13 connects a first lateral end 11a of the shell 3a to a first lateral end 11b of the shell 3b. Moreover, at a second lateral end 12a, opposite the first lateral end 11a, the shell 3a is provided with a not necessarily cylindrical projection 14 suitable for inserting and interacting with the corresponding housing 15 formed at the second lateral end 12b of the second shell 3b when the two shells 3a, 3b are arranged opposite each other around the wire 2.

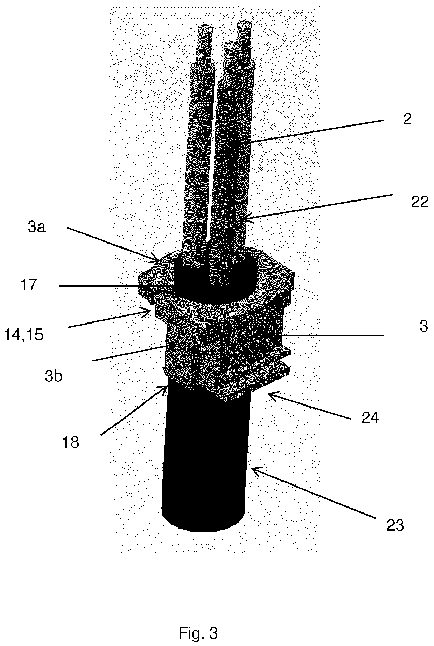

The shell device 3 is shown in Figure 3 wherein the two shells 3a, 3b have wound the wire 2 and the protuberance 14 is inserted into the housing 15 to block the wire 2 in the first cavity 4 formed inside the two shells 3a, 3b.

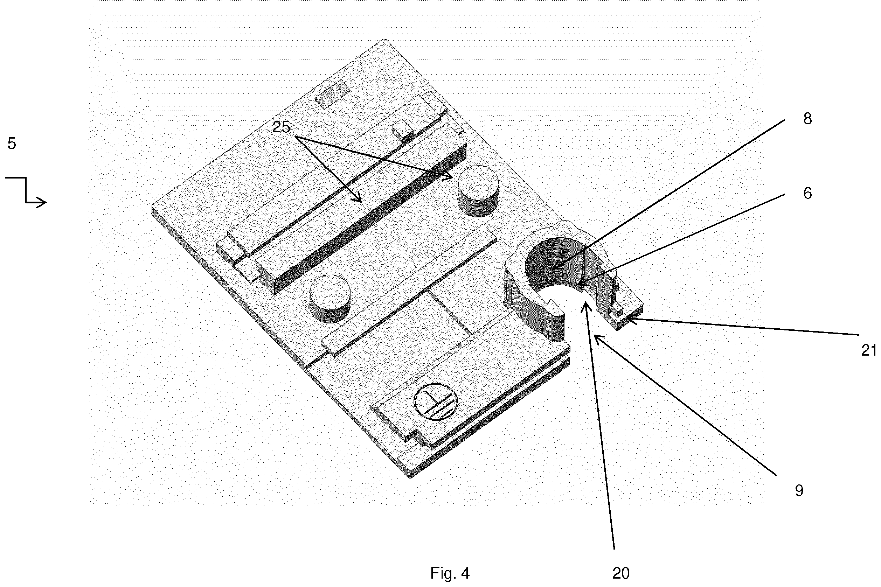

A plate 5 for a domestic appliance is shown in Figure 4. The substantially rectangular shaped plate 5 with typical relief elements 25 which are not detailed herein is provided with a seat 6 consisting of a main body 7, which substantially vertically extends with respect to the plate 5. The main body 7 is provided inside a second cavity 8 adapted to house the shell device 3 inside it. Moreover, the main body 7 of the seat 6 is provided with a lateral opening 9 of such dimensions as to only allow the passage of the wire through it 9.

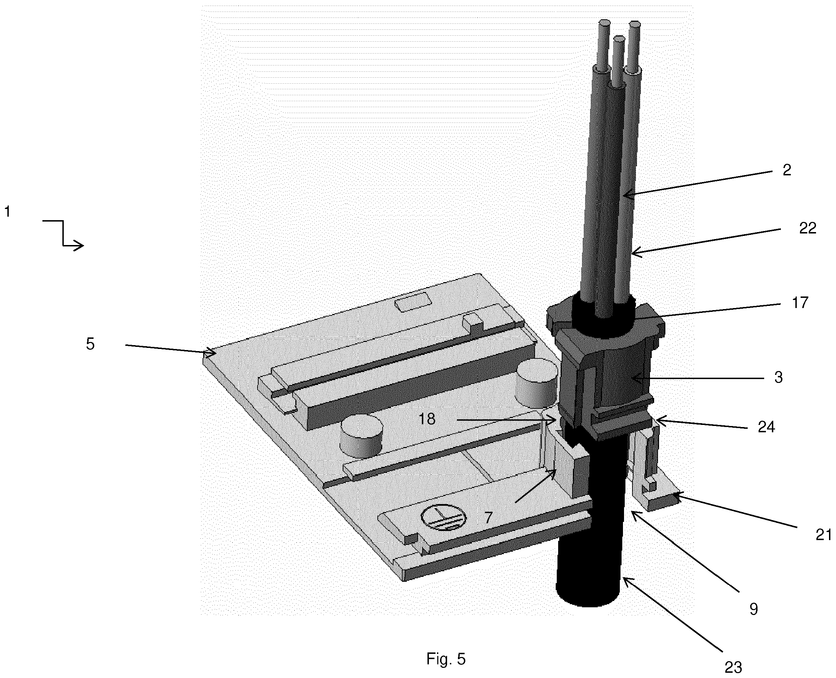

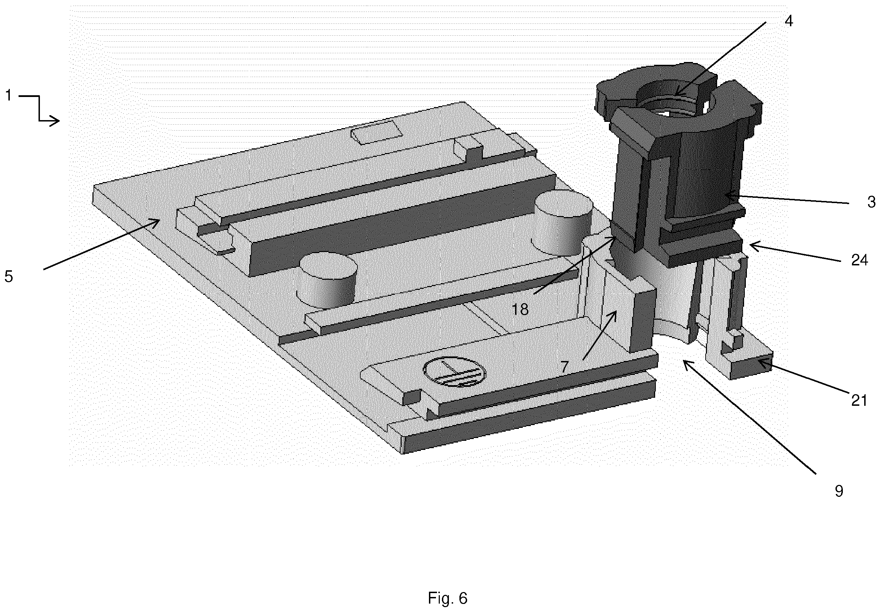

In use, the shell device 3 is fixed around the first length portion 17 of the wire 2 (as shown in Figure 3), the second length portion 23 of the wire 2, which is the downward extension of the first length portion 17 of the wire 2, protrudes from the first cavity 4 below the shell device 3, while the third length portion 22 of the wire 2, which is the upward extension of the first length portion 17 of the wire 2, protrudes from the first cavity 4 above the shell device 3. Next, the second length portion 23 of the wire 2 underlying the shell device 3 is passed through the lateral opening 9 formed in the main body 7 of the seat 6 located on the plate 5 (see Figure 5 and also in Figure 6, where the wire 2 has been removed for better clarity).

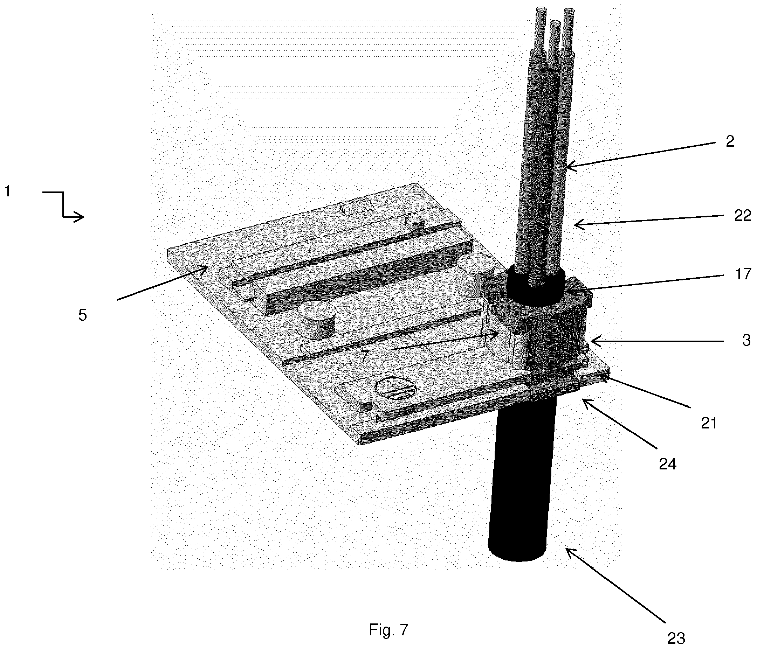

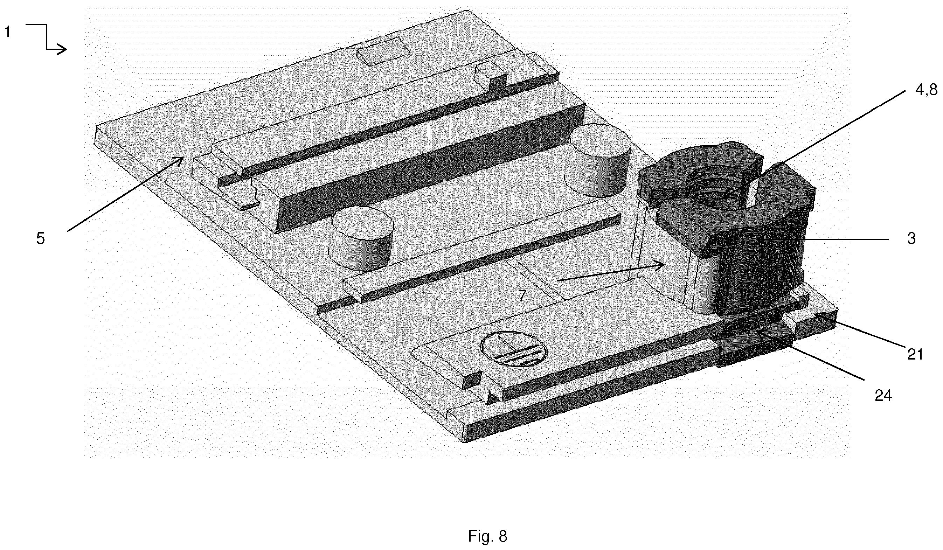

Subsequently, the shell device 3 is vertically lowered to occupy the second cavity 8 inside the main body 7 of the seat 6, where it is blocked (see Figure 7 and also in Figure 8, where the wire 2 has been removed for better clarity). In fact, the outer surface of the two shells 3a, 3b forming the shell device 3 has a squared shape which is complementary to the squared shape of the inner surface of the main body 7 of the seat 6. In this way the second cavity 8 is such as to be able to accurately accommodating the shell device 3 inside it. Moreover, the outer surface 16 of the two shells 3a, 3b forming the shell device 3 is provided in its lower part with protruding fixing teeth 18 which engage with first undercut elements 20 arranged in the lower part of the inner surface of the main body 7 of the seat 6. In this way the shell device 3 is prevented from accidentally disengaging from the main body 7 of the seat 6. Furthermore, the protruding fixing teeth 18 have a squared or prismatic shaped section, in order to avoid a rotation of the teeth 18 around the undercut elements 20. Moreover, at the lateral opening 9 of the main body 7 of the seat 6 there are arranged second undercut elements 21 which engage with cantilevered fastening elements 24 placed in the lower part of the two shells 3a, 3b which form the shell device 3. In this way the shell device 3 which surrounds the wire 2 is further locked to the plate 5. Naturally, many modifications and variations of the described preferred embodiments will be evident to those skilled in the art, still remaining within the scope of the invention as defined in the independent claims.

For example, the shell device can take any shape such as to maintain its characteristic of being able to wrap a wire and to be fixed around it. Likewise, the main body of the seat fixed on the plate can be of any shape such as to allow to house at its inside this shell device wrapping the wire. Moreover, also the fastening elements positioned in the lower part of the shell device can assume any shape and size such as to allow the shell device to fix to the plate by engagement with corresponding elements of the main body of the seat fixed onto the plate and/or corresponding elements of the plate itself.

Therefore, the present invention is not limited to the preferred embodiments described, illustrated only by way of non-limiting example, but is defined by the following claims.

## Claims

1. System (1) for wire (2) locking comprising: a) a shell device (3) provided with a first cavity (4) suitable for housing at its inside a first portion (17) of the length of said wire (2), and adapted to allow a second portion (23) of length of the wire (2), which is the extension of said first portion (17) of length of the wire, to escape from said first cavity (4) below said shell device (3), b) a plate (5) provided with a seat (6) consisting of a main body (7) provided at its inside with a second cavity (8) adapted to house said shell device (3), wherein
c) said main body (7) of the seat (6) is provided with a lateral opening (9) of such dimensions to allow the passage, through it, by means of a first horizontal movement along the plane of the surface of said plate (5), of only said second portion (23) of length of the wire (2) and such as to prevent at the same time the passage, through it, by means of said first horizontal movement, of said shell device (3) having inside therein said first portion (17) of the length of the wire (2), d) said shell device (3) is also provided with fixing elements (18,24) allowing the locking in said second cavity (8) of the main body (7) of the seat (6) arranged in the plate (5) by a second vertical movement perpendicular to said first horizontal movement of the shell device (3), once executed said first horizontal movement, wherein said shell device (3) consists of at least two structural elements (3a, 3b), each of them being provided with a semi-cylindrical portion (10a, 10b) so that when said portions (10a, 10b) of structural elements (3a, 3b) are arranged opposite one each other, said first cavity (4) inside said shell (3) adapted to house the wire (2) appears to be substantially cylindrical in shape and wherein the external surface (16) of at least one of said structural elements (3a, 3b) forming said shell device (3) has a square shape and is provided in its lower part with protruding (18) or cantilevered fastening elements (24), wherein at least a portion of the inner surface of said main body (7) of the seat (6) arranged in the plate (5) is squared in shape and such as to house said shell device (3) in said second cavity (8) disposed therein, and is further provided in its lower part with first undercut elements (20) with which said protruding fastening elements (18) of said structural elements (3a, 3b) forming said shell device (3) are engaging, so as to lock the shell device (3) in the main body (7) of the seat (6).

2. System (1) according to claim 1, wherein said main body (7) of the seat (6) arranged in the plate (5) extends substantially vertically with respect to the plate (5).

3. System (1) according to claim 1 or 2 wherein each of said first (3a) and second structural element (3b) is provided with a first lateral end (11a, 11b) connected by at least one connecting element (13) to a second lateral end (12a, 12b), opposite to said first lateral end (11a, 11b).

4. System (1) according to claim 3 wherein one of the second lateral ends (12a, 12b) of the first (3a) or of the second structural element (3b) is provided with a protuberance (14) having a substantially cylindrical or conical or prismatic or other shape suitable for inserting into and interacting with a corresponding housing (15) formed in correspondence of the other one among the second lateral end (12b, 12a) of the second structural element (3b) or of the first structural element (3a) when said semi-cylindrical portions (10a, 10b) of the structural elements (3a, 3b) are arranged opposite one each other around said wire (2).

5. System (1) according to anyone of the previous claims wherein, at said lateral opening (9) of the main body (7) of the seat (6), said plate (5) is provided with second undercut elements (21) with which said cantilevered fastening elements (24) of said structural elements (3a, 3b) forming said shell device (3) are engaging, so as to further lock the shell (3) to the plate (5) in the main body (7) of the seat (6).

6. A method for wire (2) locking in a suitable plate (5) of an electrical appliance using the system (1) for wire (2) locking indicated in any of the claims 1-5, a method which includes the phases:
a) positioning a shell device (3) around a wire (2) so that a first portion (17) of length of the wire (2) occupies a first cavity (4) inside said shell device (3) and that a second portion (23) of length of the wire (2), which is the extension of said first portion (17) of length of the wire (2), protrudes below said shell device (3);
b) fixing said shell device (3) around the wire (2) by means of fastening elements (14, 15);
c) let pass by means of a first horizontal movement along the plane of the surface of said plate (5), said second portion of the wire (23), positioned underneath the shell device (3), through a lateral opening (9) formed in the main body (7) of a seat (6) arranged in said plate (5), wherein said main body (7) of the seat (6) extends substantially vertically with respect to the plate (5) and is provided at its inside with a second cavity (8) in such a shape as to be able to house therein the shell device (3);
d) inserting said shell device (3) which wraps said wire (2) in said second cavity (8) formed in the main body (7) of the seat (6) located in the plate (5) by means of a second vertical movement perpendicular to said first horizontal movement;
e) locking the shell device (3) to the main body (7) of the seat (6) in the plate (5),
wherein the external surface (16) of at least one of said structural elements (3a, 3b) forming said shell device (3) has a square shape and is provided in its lower part with protruding (18) or cantilevered fastening elements (24), and the shell device (3) is locked to the main body (7) of the seat (6) by means of interaction between said projecting (18) or cantilevered fastening elements (24) provided in the lower portion of the outer surface (16) of the shell (3) respectively with first undercut elements (20) provided in the lower part of the inner surface of the main body (7) of the seat and/or with second undercut elements (21) arranged on the plate (5) at the lateral opening (9) of the main body (7) of the seat (6).

## Patentansprüche

1. System (1) zur Verriegelung eines Drahtes (2), was folgendes umfasst: a) eine Schalenvorrichtung (3), die mit einem ersten Hohlraum (4) ausgestattet ist, der geeignet ist, in seinem Inneren einen ersten Teil (17) der Länge des besagten Drahtes (2) aufzunehmen und der angepasst ist, um einen zweiten Teil (23) der Länge des Drahtes (2) zu ermöglichen, welcher die Verlängerung des besagten ersten Teils (17) der Länge des Drahtes ist, um aus besagtem ersten Hohlraum (4) unter der besagten Schalenvorrichtung (3) auszutreten, b) eine Platte (5), die mit einem Sitz (6) ausgestattet ist, die aus einem Hauptkörper (7) besteht, der in seinem Inneren mit einem zweiten Hohlraum (8) ausgestattet ist, der angepasst ist, um besagte Schalenvorrichtung (3) aufzunehmen, wobei c) besagter Körper (7) des Sitzes (6) mit einer seitlichen Öffnung (9) von solchen Abmessungen ausgestattet ist, dass der Durchgang durch sie mit Hilfe einer ersten horizontalen Bewegung entlang der Ebene der Oberfläche der besagten Platte (5) nur des besagten zweiten Teils (23) der Länge des Kabels (2) erlaubt wird und zwar derart, dass gleichzeitig der Durchgang durch sie mit Hilfe der ersten horizontalen Bewegung der besagten Schalenvorrichtung (3), in deren Innerem sich der erste Teil (17) der Länge des Drahtes (2) befindet, verhindert wird, d) besagte Schalenvorrichtung (3) ist ebenso mit Befestigungselemente (18,24) ausgestattet, um die Verriegelung in besagtem zweiten Hohlraum (8) des Hauptkörpers (7) des Sitzes (6), der in der Platte (5) angeordnet ist, durch eine zweite vertikale Bewegung, die lotrecht zur besagten ersten Bewegung der Schalenvorrichtung (3) ist, zu erlauben, sobald die besagte erste horizontale Bewegung ausgeführt wurde, wobei besagte Schalenvorrichtung (3) aus mindestens zwei Strukturelementen (3a, 3b) besteht, von denen jedes mit einem halbzylindrischen Teil (10a, 10b) ausgestattet ist, so dass, wenn besagte Teile (10a, 10b) der Strukturelemente (3a, 3b) einander gegenüber angeordnet sind, besagter erster Hohlraum (4) in besagter Schale (3), die zur Aufnahme des Drahtes (2) angepasst ist, im Wesentlichen eine zylindrische Form zu haben scheint und wobei die Außenfläche (16) von mindestens einem der besagten Strukturelemente (3a, 3b), die besagte Schalenvorrichtung (3) bilden, eine quadratische Form hat, die im unteren Teil mit vorspringenden (18) oder ausladenden Befestigungselementen (24) ausgestattet ist, wobei wenigstens ein Teil der Innenfläche des besagten Hauptkörpers (7) des Sitzes (6), der in der Platte (5) angeordnet ist, von quadratischer Form ist und zwar derart, um die besagte Schalenvorrichtung (3) in besagtem zweiten Hohlkörper (8), der darin angeordnet ist, aufzunehmen und weiter ist er in seinem unteren Teil mit ersten unterschnittenen Elementen (20) ausgestattet, mit denen besagte herausragende Befestigungselemente (18) der besagten Strukturelemente (3a, 3b), die besagte Schalenvorrichtung (3) bilden, eingegriffen sind, um die besagte Schalenvorrichtung (3) im Hauptkörper (7) des Sitzes (6) zu verriegeln.

2. System (1) gemäß Anspruch 1, wobei sich besagter Hauptkörper (7) des Sitzes (6), der an der Platte (5) angeordnet ist, im Wesentlichen vertikal in Bezug zur Platte (5) erweitert.

3. System (1) gemäß Anspruch 1 oder 2, wobei jedes der besagten ersten (3a) oder zweiten Strukturelementen (3b) mit einem ersten seitlichen Ende (11a, 11b) ausgestattet ist, das durch mindestens ein Verbindungselement (13) an ein zweites seitliches Ende (12a, 12b) verbunden ist und zwar gegenüber dem besagten ersten seitlichen Ende (11a, 11b).

4. System (1) gemäß Anspruch 3, wobei eines der zweiten seitlichen Enden (12a, 12b) des ersten (3a) oder des zweiten Strukturelements (3b) mit einer Ausstülpung (14) versehen ist, die eine im Wesentlichen zylindrische oder konische oder prismatische oder eine andere Form aufweist, die geeignet ist, in ein entsprechendes Gehäuse (15) eingesetzt zu werden und mit ihm zusammenzuwirken. Dieses Gehäuse ist entsprechend dem anderen zwischen dem zweiten seitlichen Ende (12b, 12a) des zweiten Strukturelements (3b) oder des ersten Strukturelements (3a) gebildet, wenn besagte halbzylindrische Teile (10a, 10b) der Strukturelemente (3a, 3b) einander gegenüber um den Draht (2) herum angeordnet sind.

5. System (1) gemäß einem der vorstehenden Ansprüche, wobei an der seitlichen Öffnung (9) des Hauptkörpers (7) des Sitzes (6) besagte Platte (5) mit zweiten unterschnittenen Elementen (21) ausgestattet ist, mit denen besagte ausladende Befestigungselemente (24) der besagten Strukturelemente (3a, 3b), die die besagte Schalenvorrichtung (3) bilden, eingegiffen sind, um die Schale (3) weiter an der Platte (5) im Hauptkörper (7) des besagten Sitzes (6) zu verriegeln.

6. Ein Verfahren zum Verriegeln des Drahtes (2) in einer geeigneten Platte (5) eines Elektrogeräts unter Verwendung des Systems (1) zum Verriegeln von Draht (2), das in irgendeinem der Ansprüche 1-5 angegeben ist, ein Verfahren, das folgende Phasen umfasst:
a) Positionierung einer Schalenvorrichtung (3) um ein Draht (2), so dass ein erster Teil (17) der Länge des Drahtes (2) einen ersten Hohlraum (4) in der besagten Schalenvorrichtung (3) besetzt und das sein zweiter Teil (23) der Länge des Drahtes (2), der die Erweiterung des besagten ersten Teils (17) der Länge des Drahtes (2) ist, unter besagter Schalenvorrichtung (3) hervorsteht;
b) Befestigung der besagten Schalenvorrichtung (3) um ein Draht (2) mit Hilfe von Befestigungselementen (14, 15);
c) passieren lassen mit Hilfe einer ersten horizontalen Bewegung entlang der Ebene der Oberfläche der besagten Platte (5) des zweiten Teil des Drahtes (23), der unter der Schalenvorrichtung (3) positioniert ist und zwar durch eine seitliche Öffnung (9), die im Hauptkörper (7) des Sitzes (6), der in besagter Platte (5) angeordnet ist, gebildet wurde, wobei sich besagter Hauptkörper (7) des Sitzes (6) im Wesentlichen vertikal in Bezug auf die Platte (5) erstreckt und in seinem Inneren mit einem zweiten Hohlraum (8) ausgestattet ist und zwar in einer solchen Form, dass die Schalenvorrichtung (3) darin untergebracht werden kann;
d) Einführen der besagten Schalenvorrichtung (3), die den besagten Draht (2) umhüllt, in besagten Hohlraum (8), der im Hauptkörper (7) des Sitzes (6), der sich in der Platte (5) befindet, gebildet ist, mit Hilfe einer zweiten vertikalen Bewegung, die lotrecht zur besagten ersten horizontalen Bewegung ist;
e) Verriegeln der Schalenvorrichtung (3) am Hauptkörper (7) des Sitzes (6) in der Platte (5),
wobei die Außenfläche (16) von mindestens einem der besagten Strukturelemente (3a, 3b), die die besagte Schalenvorrichtung (3) bilden, eine quadratische Form hat und in seinem unteren Teil mit vorspringenden (18) oder ausladenden Befestigungselementen (24) versehen ist und die Schalenvorrichtung (3) am Hauptkörper (7) des Sitzes (6) verriegelt ist und zwar mit Hilfe der Wechselwirkung zwischen besagten vorspringenden (18) oder ausladenden Befestigungselementen (24), die im unteren Teil der Außenfläche (16) der Schalenvorrichtung (3) jeweils mit ersten unterschnittenen Elementen (20) vorgesehen sind, die im unteren Teil der Innenfläche des Hauptkörpers (7) des Sitzes vorgesehen sind und/oder mit zweiten unterschnittenen Elementen (21), die auf der Platte (5) bei der seitlichen Öffnung (9) des Hauptkörpers (7) des Sitzes (6) angeordnet sind.

## Revendications

1. Système (1) de verrouillage du fil (2) comprenant : a) un dispositif à coquille (3) pourvu d'une première cavité (4) adaptée pour loger à l'intérieur une première partie (17) de la longueur dudit fil (2), et adaptée pour permettre à une deuxième partie (23) de la longueur du fil (2), qui est le prolongement de ladite première partie (17) de la longueur du fil, de sortir de ladite première cavité (4) sous ledit dispositif à coquille (3), b) une plaque (5) pourvue d'un siège (6) constitué d'un corps principal (7) pourvu à l'intérieur d'une seconde cavité (8) adaptée pour loger ledit dispositif à coquille (3), dans laquelle c) ledit corps principal (7) du siège (6) est pourvu d'une ouverture latérale (9) de dimensions telles qu'elle permet le passage, à travers elle, au moyen d'un premier mouvement horizontal le long du plan de la surface de ladite plaque (5), de seulement ladite deuxième partie (23) de la longueur du fil (2) et de manière à empêcher en même temps le passage, à travers elle, au moyen dudit premier mouvement horizontal, dudit dispositif à coquille (3) ayant à l'intérieur de celui-ci ladite première partie (17) de la longueur du fil (2), d) ledit dispositif à coquille (3) est également pourvu d'éléments de fixation (18, 24) permettant le verrouillage dans ladite seconde cavité (8) du corps principal (7) du siège (6) disposé dans la plaque (5) par un second mouvement vertical perpendiculaire audit premier mouvement horizontal du dispositif à coquille (3), une fois exécuté ledit premier mouvement horizontal, dans lequel ledit dispositif à coquille (3) est constitué d'au moins deux éléments structurels (3a, 3b), chacun d'eux étant pourvu d'une partie semi-cylindrique (10a, 10b) de sorte que lorsque lesdites parties (10a, 10b) des éléments structurels (3a, 3b) sont disposées en face l'une de l'autre, ladite première cavité (4) à l'intérieur de ladite coquille (3) adaptée pour loger le fil (2) semble être de forme sensiblement cylindrique et dans laquelle la surface externe (16) d'au moins un desdits éléments structurels (3a, 3b) formant ledit dispositif à coquille (3) a une forme carrée et est pourvue dans sa partie inférieure d'éléments de fixations en saillie (18) ou en porte-à-faux (24), dans laquelle au moins une partie de la surface intérieure dudit corps principal (7) du siège (6) disposé dans la plaque (5) est de forme carrée et de manière à loger ledit dispositif à coquille (3) dans ladite deuxième cavité (8) qui y est disposée, et est en outre pourvu dans sa partie inférieure de premiers éléments de dégagement (20) avec lesquels s'engagent lesdits éléments de fixation saillants (18) desdits éléments structurels (3a, 3b) formant ledit dispositif à coquille (3), de manière à verrouiller le dispositif à coquille (3) dans le corps principal (7) du siège (6).

2. Système (1) selon la revendication 1, dans lequel ledit corps principal (7) du siège (6) disposé dans la plaque (5) s'étend sensiblement sur le plan vertical par rapport à la plaque (5).

3. Système (1) selon la revendication 1 ou 2, dans lequel chacun desdits premier (3a) et deuxième (3b) éléments structurels est pourvu d'une première extrémité latérale (11a, llb) reliée par au moins un élément de liaison (13) à une deuxième extrémité latérale (12a, 12b), opposée à ladite première extrémité latérale (11a, 11b).

4. Système (1) selon la revendication 3, dans lequel l'une des secondes extrémités latérales (12a, 12b) du premier (3a) ou du second élément structurel (3b) est pourvue d'une protubérance (14) ayant une forme sensiblement cylindrique, conique, prismatique ou une autre forme appropriée pour être insérée dans et interagir avec un logement correspondant (15) formé en correspondance de l'autre au sein de la seconde extrémité latérale (12b, 12a) du deuxième élément structurel (3b) ou du premier élément structurel (3a) lorsque lesdites parties semi-cylindriques (10a, 10b) des éléments structurels (3a, 3b) sont disposées en vis-à-vis autour dudit fil (2).

5. Système (1) selon l'une quelconque des revendications précédentes dans lequel, au niveau de ladite ouverture latérale (9) du corps principal (7) du siège (6), ladite plaque (5) est munie de seconds éléments de dégagement (21) avec lesquels lesdits éléments de fixation en porte-à-faux (24) desdits éléments structurels (3a, 3b) formant ledit dispositif à coquille (3) sont engagés, de manière à verrouiller davantage la coquille (3) à la plaque (5) dans le corps principal (7) du siège (6).

6. Méthode de verrouillage du fil (2) dans une plaque appropriée (5) d'un appareil électrique utilisant le système (1) de verrouillage du fil (2) indiqué dans l'une des revendications 1 à 5, comprend les phases suivantes :
a) positionnement d'un dispositif à coquille (3) autour d'un fil (2) de sorte qu'une première partie (17) de la longueur du fil (2) occupe une première cavité (4) à l'intérieur dudit dispositif à coquille (3) et qu'une deuxième partie (23) de la longueur du fil (2), qui est le prolongement de ladite première partie (17) de la longueur du fil (2), dépasse sous ledit dispositif à coquille (3) ;
b) fixation dudit dispositif à coquille (3) autour du fil (2) au moyen d'éléments de fixation (14, 15) ;
c) passage, au moyen d'un premier mouvement horizontal le long du plan de la surface de ladite plaque (5), de ladite seconde partie du fil (23), positionnée sous le dispositif à coquille (3), à travers une ouverture latérale (9) formée dans le corps principal (7) d'un siège (6) disposé dans ladite plaque (5), dans lequel ledit corps principal (7) du siège (6) s'étend sensiblement sur le plan vertical par rapport à la plaque (5) et est pourvu, à l'intérieur, d'une seconde cavité (8) de forme telle qu'elle puisse y loger le dispositif à coquille (3) ;
d) insertion dudit dispositif à coquille (3) qui enveloppe ledit fil (2) dans ladite seconde cavité (8) formée dans le corps principal (7) du siège (6) situé dans la plaque (5) au moyen d'un second mouvement vertical perpendiculaire audit premier mouvement horizontal ;
e) verrouillage du dispositif à coquille (3) sur le corps principal (7) du siège (6) dans la plaque (5),
dans lequel la surface extérieure (16) d'au moins un desdits éléments structurels (3a, 3b) formant ledit dispositif à coquille (3) a une forme carrée et est pourvue dans sa partie inférieure d'éléments de fixation en saillie (18) ou en porte-à-faux (24), et le dispositif à coquille (3) est verrouillé au corps principal (7) du siège (6) au moyen d'une interaction entre lesdits éléments de fixation en saillie (18) ou en porte-à-faux (24) prévus dans la partie inférieure de la surface extérieure (16) de la coquille (3) respectivement avec des premiers éléments de dégagement (20) prévus dans la partie inférieure de la surface interne du corps principal (7) du siège et/ou avec des seconds éléments de dégagement (21) disposés sur la plaque (5) au niveau de l'ouverture latérale (9) du corps principal (7) du siège (6).
